# NOUVEAU FASCICULE DE BREVET EUROPEEN

(11) **EP 2 683 540 B2**
(45) Date de publication et mention de la décision concernant l'opposition: **18.01.2023**
(45) Mention de la délivrance du brevet: 29.04.2020
(21) Numéro de dépôt: 12708303.8
(22) Date de dépôt: 07.03.2012
(51) Int. Cl.: B29C 49/42, B29C 49/48, B29C 31/00

(54) **SYSTEME D'ASSISTANCE AU CHANGEMENT DE MOULE D'UNITE DE MOULAGE D'UNE MACHINE DE FABRICATION DE RECIPIENTS**
HILFSSYSTEM FÜR DEN ERSATZ EINER FORM EINER FORMGIESSEINHEIT EINER MASCHINE ZUR HERSTELLUNG VON BEHÄLTERN
SYSTEM FOR AIDING IN THE REPLACEMENT OF A MOULD OF A MOULDING UNIT OF A MACHINE FOR MANUFACTURING CONTAINERS

(30) Priorité: 08.03.2011 FR 1151876
(43) Date de publication de la demande: 15.01.2014
(60) Demande divisionnaire: 20166834.0
(73) Titulaire: Sidel Participations, 76930 Octeville-sur-Mer (FR)
(72) Inventeur: CIRETTE, Damien, F-76930 Octeville Sur Mer (FR); PRIEUR, Arnaud, F-76930 Octeville Sur Mer (FR)
(74) Mandataire: Sidel Group
(86) Numéro de dépôt international: PCT/EP2012/053881
(87) Numéro de publication internationale: WO 2012/120031

(56) Documents cités:
- US-A1- 2010 310 705
- US-A1- 2011 052 744

## Description

La présente invention concerne un système d'assistance au changement de moule et une unité de moulage selon la revendication 1, le système d'assistance au changement de moule étant destine étre mis en œuvre pour changer au moins un moule de l'unité de mouage équipant une machine de fabrication de récipients.

Le document US-A-2011/052744 décrit un exemple de système d'assistance au changement de moule et d'une unité de moulage équipant une machine de fabrication de récipients selon le préambule de la revendication 1.

Une unité de moulage de récipients comporte au moins :
- deux porte-moules qui sont montés mobiles entre au moins une position ouverte et une position fermée de l'unité de moulage, et
- un moule comportant au moins deux éléments de moulage susceptibles d'être réunis pour occuper une position jointe ou d'être séparés pour occuper une position disjointe, chacun desdits au moins deux éléments de moulage du moule est apte à être fixé de manière démontable à l'un des porte-moules associés par l'intermédiaire de moyens de fixation associés, lesquels moyens de fixation associés sont aptes à être commandés lorsque l'unité de moulage est en position fermée entre au moins une position de fixation et une position de libération.

On connaît de l'état de la technique des machines de fabrication de récipients, en particulier de fabrication de bouteilles, de flacons, etc. lesquels récipients sont obtenus par formage d'une préforme (ou ébauche) qui, en matière thermoplastique telle que du PET, est préalablement conditionnée thermiquement dans un four.

Un changement de moule est en particulier requis pour procéder à des fabrications de récipients de formes et/ou de dimensions différentes ou encore à leur remplacement en cas d'endommagement et/ou d'usure des éléments de moulage.

On distingue principalement du fait de leur structure et de leur fonctionnement au cours du cycle de fabrication, les machines dites "linéaires" des machines dites "rotatives".

A titre non limitatif, on se reportera par exemple au document WO-2008/132090 pour de plus amples détails, la figure 1 illustrant schématiquement une machine de fabrication de type "linéaire".

A titre non limitatif, on se reportera également aux documents FR-2.796.588 ou FR-2.709.264 dont les figures 1 représentent respectivement une installation de fabrication de récipients comportant une telle machine "rotative" dont les unités de moulage en portefeuille sont alimentées par des moyens de transfert des préformes en provenance du four de conditionnement thermique.

Les machines "rotatives" de fabrication de récipients comportent un nombre variable d'unités de moulage qui sont réparties circonférentiellement sur un carrousel entraîné en rotation.

Dans ces machines, chaque unité de moulage comporte des moyens de formage associés pour opérer, par l'intermédiaire d'au moins un fluide sous pression, la transformation d'une ou plusieurs préformes simultanément en fonction du nombre d'empreinte(s) du moule.

De manière connue, le formage du récipient à partir d'une préforme est notamment obtenu par soufflage ou par étirage-soufflage en utilisant de l'air sous pression.

On pourra toutefois se reporter par exemple au document FR-2.764.544 pour plus de détails sur des moyens de soufflage associés à l'unité de moulage, ces moyens sont encore appelés "tuyère de soufflage".

Les machines, dites rotatives, sont équipées d'unités de moulage présentant des caractéristiques spécifiques, en particulier chaque unité de moulage comporte des porte-moules qui sont généralement montés mobiles autour d'un axe de rotation (et non en translation comme dans les machines "linéaires").

Ainsi, les porte-moules de l'unité de moulage sont par exemple montés mobiles autour d'un axe de rotation d'orientation verticale de manière que l'unité de moulage s'ouvre vers l'extérieur du carrousel de la machine et, en raison de cette cinématique, une unité de moulage de ce type est appelée "en portefeuille" (ou "*book-like opening*" en anglais).

Les documents FR-2.659.265 ou FR-2.843.714 illustrent des exemples de réalisation d'une unité de moulage en portefeuille comportant un moule constitué par au moins deux éléments de moulage (ou demi-moules) qui, respectivement muni d'une demi-empreinte de moulage, sont fixés de manière démontable à deux porte-moules associés par l'intermédiaire de moyens de fixation.

Dans le document FR-2.659.265, les moyens de fixation associés formés par des vis sont aptes à être manœuvrés entre au moins deux positions correspondant respectivement à un état de fixation et un état de libération des éléments de moulage et cela manuellement par au moins un opérateur utilisant pour ce faire un outil approprié (tournevis, clés 6 pans, etc.).

Le document WO-96/33059 illustre un autre exemple de réalisation d'unité de moulage en portefeuille comportant différents perfectionnements apportés à de telles unités.

On rappellera tout d'abord que, selon le récipient à fabriquer, les éléments de moulage sont en effet constitués soit simplement de deux demi-moules, soit et tel que représenté dans ce document de deux demi-moules et d'un fond de moule séparé, en particulier lorsque le récipient présente un fond de forme complexe, par exemple pétaloïde, susceptible de poser des problèmes lors du démoulage.

Ensuite, la structure du moule de l'unité de moulage diffère en ce que, par comparaison par exemple avec celle du document FR-2.659.265 précité, chaque élément de moulage (ou demi-moule) est divisé en deux parties distinctes, à savoir et selon la terminologie de ce document, d'une part un porte-coquille intégrant en outre des moyens de refroidissement et, d'autre part, une coquille comportant une demi-empreinte de moulage du récipient.

De telles coquilles sont plus aisément manipulées à bras d'homme par un opérateur en raison de leur moindre poids, ne nécessitent pas de déconnection des raccords fluidiques liés à la fonction de refroidissement et permettent d'optimiser le choix des matériaux pour chacune des parties selon la fonction assurée, par exemple de l'aluminium pour les coquilles.

Chacun des porte-coquilles est apte à être fixé de manière démontable à un porte-moule associé grâce à des premiers moyens de fixation, tels que des vis, tandis que la coquille est apte à être fixée de manière démontable au porte-coquille par l'intermédiaire d'autres moyens de fixation rapides, distincts des premiers moyens de fixation.

Les moyens de fixation rapides intervenant entre chaque coquille et le porte-coquille associé sont destinés à réduire le temps nécessaire à un opérateur procédant à un changement de moule pour libérer la coquille en place du porte-coquille lors du son démontage puis, lors du montage, pour fixer ensuite l'autre coquille.

Dans une unité de moulage de ce type, le changement de moule est réalisé par au moins un opérateur qui, l'unité de moulage étant en position ouverte, procède manuellement au démontage successif de l'une puis l'autre des coquilles en manoeuvrant lesdits moyens de fixation rapides au moyen d'un outil (par exemple un tournevis) pour les libérer, les mêmes opérations étant répétées en sens inverse pour effectuer la fixation lors du montage de chacune des autres coquilles.

En conséquence, quelle que soit la conception du moule de l'unité de moulage et les moyens de fixation associés mis en œuvre, il est constant que les solutions de l'état de la technique pour réaliser un changement de moule nécessitent toutes une succession d'un nombre important d'opérations qui sont effectuées manuellement par un ou plusieurs opérateurs.

S'agissant par exemple du démontage, un ou parfois deux opérateurs interviennent manuellement sur l'unité de moulage pour procéder successivement à l'ouverture de l'unité de moulage, à la libération de l'élément de moulage (quel qu'il soit demi-moule ou coquille) et à l'extraction suivant un mouvement circulaire de l'arrière vers l'avant dudit élément de moulage libéré hors du porte-moule associé, opérations qui sont répétées pour l'autre élément de moulage et auxquelles s'ajoute encore le cas échéant le démontage du fond de moule.

C'est la raison pour laquelle, les solutions connues pour procéder à un changement de moule d'une telle unité de moulage ne sont pas jugées satisfaisantes, en particulier en raison du temps important requis pour effectuer un tel changement et des conséquences économiques notamment liées à l'arrêt complet de la machine de fabrication.

De plus, pour les unités de moulage en portefeuille, l'ensemble des opérations - effectuées par un ou parfois deux opérateurs en vue de réaliser un changement de moule - est rendu complexe et ralenti par les difficultés d'accès aux éléments de moulage du moule car l'environnement général d'une telle unité de moulage en portefeuille n'offre qu'une accessibilité très réduite, l'écartement des porte-moules en position ouverte étant déterminé par rapport au récipient final à extraire hors du moule en mode de fonctionnement, dit de fabrication.

De plus, dans une machine, l'écartement des porte-moules en position ouverte est aussi limité par l'espacement entre les unités de moulage, soit pour une unité de moulage donnée par chacune des unités de moulage adjacentes situées en amont et en aval, deux unités de moulage consécutives ne pouvant pas occuper simultanément la position ouverte sans que n'entrent en contact leurs porte-moules.

La durée requise pour procéder au changement d'un moule est encore à multiplier par le nombre d'unités de moulage que comporte la machine de fabrication, lequel nombre d'unités de moulage en portefeuille est par exemple compris entre 6 et 34.

La réduction du temps nécessaire pour changer un moule reste donc une attente forte des utilisateurs de machine de fabrication de récipients, en particulier des utilisateurs procédant fréquemment à des changements de moule.

En effet, la machine n'est dans certains cas pas dédiée à la fabrication permanente d'un seul type de récipient mais exploitée pour fabriquer des récipients de contenance et/ou de forme différentes impliquant des changements de moule très fréquents, l'attention portée au temps de changement du moule d'une unité de moulage n'en étant alors que plus grande encore et à la hauteur des enjeux économiques.

L'immobilisation de la machine durant ces interventions pour changer les moules représente un coût important du fait de l'arrêt complet de la fabrication qui l'accompagne, les interventions de changement de moule sont par conséquent coûteuses.

Ainsi, la question de la réduction du temps de changement de moule d'une unité de moulage se pose quelle que soit la conception du moule, c'est-à-dire que les deux éléments de moulage soient constitués par deux demi-moules ou constitués chacun par une coquille et un porte-coquille.

"Par ailleurs, le document US2011/0052744A1 décrit un magasin pour le stockage de moules de soufflage. Le magasin comprend un dispositif de convoyage équipé d'éléments de reception pour recevoir des moules de soufflage. Le dispositif de convoyage comprend une unité de déplacement linéaire et un dispositif élévateur.

Le but de la présente invention est notamment de proposer de nouvelles solutions permettant de réduire le temps nécessaire pour réaliser un changement d'un moule d'une unité de moulage d'une machine de fabrication de récipients.

Dans ce but, la présente invention propose un système d'assistance au changement de moule et une unité de moulage pour une machine de fabrication de récipients selon la revendication 1.

Le système d'assistance est donc destiné à traiter une unité de moulage dans laquelle, chaque élément de moulage est, indépendamment de la position ouverte ou fermée de l'unité de moulage, susceptible d'être libéré par rapport à son porte-moule associé, et dans laquelle lesdits au moins deux éléments de moulage sont aptes à être maintenus dans ladite position jointe par des moyens destinés à les réunir ensemble pour former temporairement un sous-ensemble unitaire transportable, soit ledit moule uni.

Grâce à un système d'assistance selon l'invention, tout ou au moins une partie des opérations nécessaires pour réaliser un changement de moule d'une unité de moulage sont automatisées et effectuées aussi simplement que rapidement, grâce à quoi le temps requis pour un tel changement de moule a pu être réduit de manière très conséquente.

A titre d'exemple non limitatif, un changement de moule est effectué avec un système d'assistance selon l'invention dans un temps total qui a pu être divisé par deux, voir par quatre, par comparaison avec le temps total auparavant nécessaire avec les solutions de l'état de la technique.

Avantageusement, un système d'assistance selon l'invention permet de réduire voir de supprimer les opérations manuelles auparavant effectuées par au moins un opérateur et ce faisant toute intervention humaine directe sur l'unité de moulage de la machine de fabrication.

Avantageusement, l'invention permet donc de supprimer tout ou partie des opérations manuelles difficiles requises pour changer un moule, au bénéfice pour les opérateurs d'une amélioration des conditions de travail, d'une réduction de la pénibilité et d'une plus grande sécurité.

Avantageusement, le dispositif de transport d'un moule uni comportant selon l'invention, au moins un bras robotisé, est mis en œuvre en combinaison avec un module d'assistance apte à réaliser sélectivement au moins l'ouverture ou la fermeture de l'unité de moulage de manière automatisée et synchrone avec le dispositif de transport, en particulier les moyens de manipulation.

Avantageusement, l'unité de moulage est pourvue de moyens de fixation des éléments de moulage aux porte-moules associés qui sont aptes à être commandés sélectivement pour réaliser automatiquement les changements d'états entre les positions verrouillée et déverrouillée et dont la conception permet de plus une commande à distance, notamment par une unité de contrôle.

Avantageusement, le changement de position (ou d'état) entre les positions verrouillée et déverrouillée des moyens de fixation est obtenu en une unique opération par l'intermédiaire des moyens commandés associés aux moyens de fixation de sorte que les changements de positions ou d'états sont obtenus de manière simple et surtout rapide car simultanément pour les deux éléments de moulage que lesdits moyens commandés soient commun ou au moins double et associés à chaque élément de moulage.

Grâce à un tel module d'assistance et/ou de tels moyens de fixation perfectionnés, on réduit encore la durée totale nécessaire pour effectuer un changement de moule par une automatisation de toutes les opérations auparavant effectuées manuellement par un ou plusieurs opérateurs, soit les opérations qui précédaient l'extraction de chaque élément de moulage (et le cas échéant du fond de moule) lors du démontage et succédaient à l'introduction de chaque élément de moulage lors du montage.

Avantageusement, en combinaison avec un module d'assistance et des moyens de fixation perfectionnés, le dispositif de transport selon l'invention permet d'obtenir une automatisation complète de toutes les opérations successivement mises en oeuvre pour procéder au changement du moule d'une unité de moulage depuis les opérations de libération et de fixation des éléments de moulage par les moyens de fixation, en passant par la commande de l'ouverture et la fermeture des porte-moules de l'unité de moulage (avec ou sans opérations de déverrouillage et verrouillage de l'unité de moulage) et pour finir les opérations de d'extraction et d'introduction du moule uni par le bras robotisé.

Selon d'autres caractéristiques de l'invention :
- le dispositif de transport comporte au moins une tête qui, associée audit bras robotisé, comporte lesdits moyens de manipulation coopérant avec au moins un moule uni pour procéder à l'extraction dudit au moins un moule uni hors des porte-moules en position ouverte de l'unité de moulage et/ou à l'introduction dudit au moins un moule uni entre lesdits porte-moules en position ouverte de l'unité de moulage ;
- ledit au moins un organe principal de préhension est constitué par une pince principale apte à saisir ladite première partie du moule uni ;
- les moyens de manipulation comportent au moins un organe secondaire de préhension destiné à coopérer avec une seconde partie du moule uni qui est accessible lorsque l'unité de moulage est en position ouverte ;
- ledit au moins un organe secondaire de préhension est constitué par une pince secondaire apte à saisir ladite seconde partie du moule uni ;
- au moins l'organe secondaire de préhension est monté mobile entre au moins une position escamotée et une position avancée ;
- le système d'assistance comporte des moyens aptes à maintenir lesdits au moins deux éléments de moulage dudit moule qui sont réunis ensemble dans ladite position jointe pour former ledit sous-ensemble unitaire transportable, dit moule uni ;
- les moyens destinés à réunir ensemble lesdits au moins deux éléments de moulage pour former le moule uni sont constitués par les moyens de manipulation ;
- la tête du dispositif de transport comporte des moyens de manipulation doublés qui sont respectivement formés par des premiers moyens de manipulation et par des deuxièmes moyens de manipulation ;
- la tête est montée mobile en rotation autour d'un axe de rotation de manière à positionner sélectivement l'un ou l'autre desdits premier ou deuxième moyens de manipulation d'un moule uni lors des opérations de changement du moule d'une unité de moulage ;
- le système d'assistance comporte un module d'assistance qui, associé audit dispositif de transport, comporte des moyens d'actionnement aptes au moins à provoquer sélectivement l'ouverture ou la fermeture de l'unité de moulage ;
- le module d'assistance du système comporte des moyens d'actionnement aptes à commander sélectivement un dispositif de verrouillage de l'unité de moulage entre des positions verrouillée et déverrouillée ;
- le système d'assistance comporte une unité de contrôle apte à piloter en synchronisation les moyens de manipulation du bras robotisé du dispositif de transport d'un moule uni et les moyens d'actionnement du module d'assistance pour réaliser de manière automatisé les opérations de changement de moule de l'unité de moulage.

D'autres caractéristiques et avantages de la présente invention apparaîtront à la lecture de la description détaillée qui va suivre pour la compréhension de laquelle on se reportera aux dessins dans lesquels :
- la figure 1 est une vue en perspective qui représente schématiquement une unité de moulage de type en portefeuille d'une machine de fabrication de récipients et qui illustre une unité de moulage en position ouverte et séparément, en éclaté, un moule du récipient comportant deux éléments de moulage et un fond de moule ;
- la figure 2 est une vue en perspective qui représente l'unité de moulage selon la figure 1 et qui illustre le moule en position jointe, les éléments de moulage enserrant le fond de moule, pour former un sous-ensemble unitaire transportable dit moule uni ;
- la figure 3 est une vue en perspective qui représente l'unité de moulage de la figure 1 en position fermée et un moule à l'intérieur des porte-moules occupant la position jointe ;
- la figure 4 est une vue en perspective qui représente la tête destinée à être associée et coopérant avec le bras robotisé du dispositif de transport d'un moule uni comportant des moyens de manipulation selon un mode de réalisation préféré de l'invention ;
- les figures 5 à 10 sont des vues en perspective qui représentent une unité de moulage et un système d'assistance au changement de moule comportant un dispositif de transport qui comporte une tête selon la figure 4 associée à un bras robotisé pour positionner les moyens de manipulation, et qui illustrent les principales étapes se succédant pour réaliser le changement de moule de l'unité de moulage avec ledit système d'assistance.

Dans la suite de la description, on adoptera à titre non limitatif les orientations longitudinale, transversale et verticale en référence au trièdre (X, Y, Z) représenté sur les figures.

Par convention, les directions longitudinale et transversale sont déterminées de manière fixe par rapport aux porte-moules de l'unité de moulage, indépendamment de la position ouverte ou fermée de l'unité de moulage.

On utilisera à titre non limitatif les termes "avant" et "arrière" en référence à la direction longitudinale, "gauche" ou "droite" en référence à la direction transversale et "supérieur" ou "inférieur" en référence à la direction verticale.

L'invention propose un système 10 d'assistance au changement de moule et une unité de moulage pour une machine 14 de fabrication de récipients.

On décrira ci-après un mode de réalisation préféré du système 10 d'assistance au changement de moule et plus particulièrement du dispositif 16 de transport d'un moule 18 uni.

Le système 10 d'assistance comportant le dispositif 16 de transport est tout particulièrement, bien que non exclusivement, destiné à être mis en œuvre pour procéder au changement du moule 18 d'une unité 12 de moulage de type portefeuille.

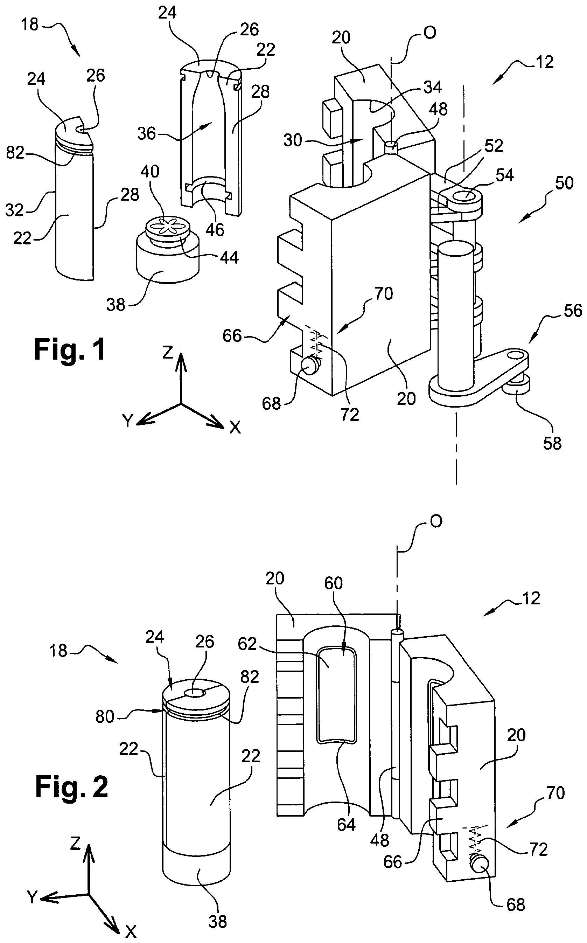

La figure 1 représente un exemple de réalisation d'une unité 12 de moulage de type portefeuille destinée à équiper une machine 14 de fabrication de récipients, en particulier par formage d'une préforme en matière plastique.

Une telle unité 12 de moulage en portefeuille est destinée à être montée sur un carrousel 15 d'une machine 14 de fabrication de récipients de type "rotative" dont ladite unité 12 constitue alors l'une des "n" unités de moulage de la machine.

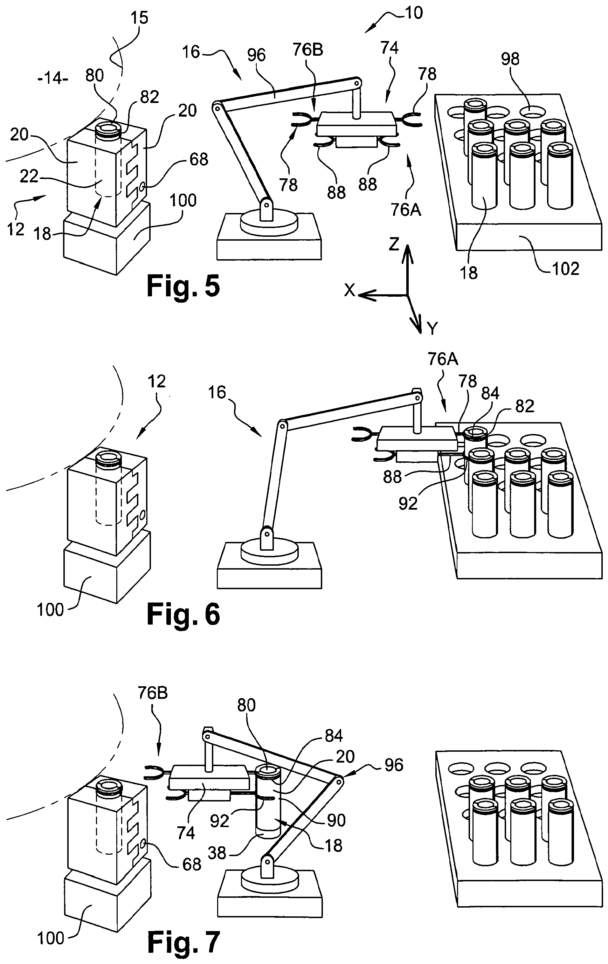

Les "n" unités 12 de moulage sont réparties circonférentiellement de manière régulière sur le carrousel 15 (représenté en trait mixte sur les figures 5 et suivantes).

De préférence, le formage du récipient est obtenu par soufflage ou par étirage-soufflage d'une préforme au moyen d'au moins un fluide sous pression, tel que de l'air.

Pour ce faire, la préforme est préalablement conditionnée thermiquement dans un four, adjacent à la machine 14 de fabrication, afin d'en ramollir la matière constitutive par chauffage au moyen notamment de lampes à rayonnement infrarouge.

L'unité 12 de moulage est par exemple supportée par une console (non représentée) qui, formant un bâti, est destinée à être rapportée à fixation sur le carrousel 15 de la machine 14 et qui supporte également des moyens de formage associés (non représentés), tels qu'une tuyère de soufflage.

De préférence, la tuyère de soufflage est agencée verticalement au dessus de l'unité 12 de moulage, lorsque la préforme est orientée avec le col en haut, et comporte des moyens de soufflage qui sont montés mobile verticalement par rapport à l'unité 12 de moulage.

L'unité 12 de moulage comporte au moins deux porte-moules 20 qui sont montés mobiles entre au moins une position ouverte et une position fermée de l'unité 12 de moulage.

L'unité 12 de moulage est de type portefeuille et les porte-moules 20 constituent des structures porteuses qui sont chacune montées pivotantes autour d'un axe O de rotation, lequel axe O de rotation est dans l'exemple illustré sur les figures 1 à 3 d'orientation verticale selon le trièdre (X, Y, Z).

En variante, seulement l'un des porte-moules 20 est monté mobile tandis que l'autre porte-moule est fixe, le porte-moule mobile étant seul commandé en déplacement entre les positions ouverte et fermée de l'unité 12 de moulage.

L'unité 12 de moulage comporte un moule 18 démontable comportant au moins deux éléments 22 de moulage susceptibles d'être réunis pour occuper une position jointe ou d'être séparés pour occuper une position disjointe.

En mode de fonctionnement, dit de fabrication, de la machine 14, soit lorsque le moule 18 est utilisé pour la fabrication du récipient, le moule 18 occupe alors successivement l'une ou l'autre desdites positions disjointe et jointe au cours du cycle de fabrication, respectivement la position disjointe pour l'introduction de la préforme ou l'extraction du récipient obtenu et la position jointe lors du formage.

Le moule 18 comporte une partie sommitale comportant une face 24 supérieure contre laquelle les moyens de formage, par exemple une tuyère de soufflage, sont destinés à venir en appui, avec étanchéité, ladite face 24 supérieure plane étant formée par la réunion en position jointe de deux éléments 22 de moulage.

Le moule 18 comporte une ouverture 26 qui débouche centralement dans la face 24 et qui, en position jointe du moule 18 et lors de la fabrication, est destinée à permettre au corps de la préforme introduite dans le moule 18 de s'étendre à l'intérieur du moule 18 tandis que le col à sa forme définitive s'étend en dehors.

En effet, on rappellera que lorsque le formage est réalisé par soufflage ou par étirage-soufflage, le fluide sous pression est introduit dans la préforme conditionnée thermiquement par le col, lequel col présente sa forme finale, c'est-à-dire celle du col du récipient.

Dans l'exemple de réalisation illustré sur les figures 1 à 3, le moule 18 présente une forme cylindrique, de section globalement circulaire.

Le moule 18 est divisé en au moins deux éléments 22 de moulage qui comportent respectivement une face 28 de joint s'étendant dans un plan d'orientation verticale.

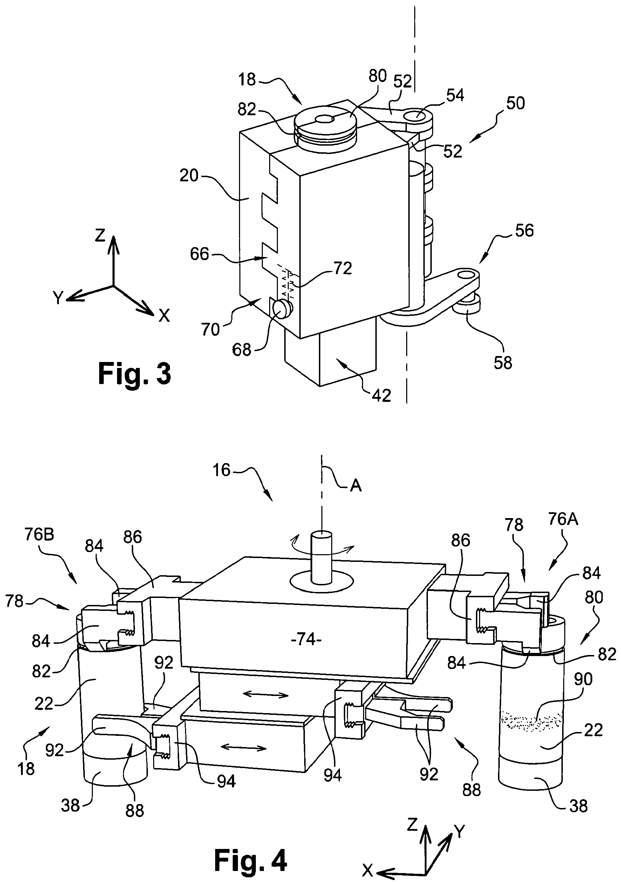

En position jointe du moule 18 tel que représentée sur les figures 2 ou 3, lesdits au moins deux éléments 22 de moulage sont réunis de manière que les faces 28 de joint de chaque élément 22 de moulage soient en contact l'une et l'autre et définissent un plan de joint du moule 18, ici d'orientation verticale et s'étendant suivant la direction longitudinale.

Chaque porte-moule 20 comporte un logement 30 présentant une forme complémentaire de celle de l'élément 22 de moulage reçu.

Selon l'exemple de réalisation, l'élément 22 de moulage comporte une paroi 32 externe opposée à la face 28 de joint et le logement 30 une paroi 34 complémentaire, lesdites parois 32 et 34 étant respectivement convexe et concave et de forme semi-circulaire.

Comme représenté à la figure 1, lesdits au moins deux éléments 22 de moulage du moule 18 sont chacun munis d'une demi-empreinte 36 correspondant au récipient à fabriquer, par exemple ici une bouteille, chacune des demi-empreintes 36 étant réalisée en creux dans la face 28 de joint.

Toutefois, lorsque le récipient à fabriquer présente un fond de forme complexe, en particulier pétaloïde, il est connu que des problèmes de démoulage sont alors susceptibles de survenir. C'est la raison pour laquelle, on prévoit avantageusement un fond 38 de moule séparé.

De préférence et selon l'exemple de réalisation, le moule 18 comporte respectivement trois éléments distincts, à savoir deux éléments 22 de moulage et un fond 38 de moule comportant une empreinte 40 du fond du récipient à fabriquer, l'empreinte 40 du fond 38 de moule déterminant, en réunion avec les demi-empreintes 36 des éléments 22 de moulage, la forme du récipient.

Pour un tel moule 18, l'unité 12 de moulage comporte des moyens 42 de support du fond 38 de moule, lesdits moyens visibles sur la figure 3 comportant des moyens de fixation du fond 38 de moule et des moyens de raccordement fluidique, notamment pour assurer des fonctions tels que le refroidissement du fond ou une assistance au décollement du fond lors du démoulage en fin de cycle de fabrication des récipients.

De tels moyens 42 associés au fond 38 de moule, encore appelés "sellette", sont connus de l'état de la technique et ne seront donc pas décrits en détail, on pourra toutefois se reporter à titre d'exemple non limitatif au document WO-2008/00938.

En position jointe, le fond 38 de moule est destiné à être enserré entre les éléments 22 de moulage auxquels le fond 38 de moule est alors lié et positionné par coopération de formes.

Pour ce faire, le fond 38 de moule comporte par exemple une partie 44 mâle, tel qu'une nervure annulaire, qui est reçue en position jointe du moule 18 dans une partie 46 femelle complémentaire, telle qu'une rainure réalisée dans chaque élément 22 de moulage.

En variante, le moule 18 ne comporte pas un tel fond 38 de moule et le moule 18 est alors uniquement constitué des deux éléments 22 de moulage.

De plus, indépendamment de la réalisation du moule 18 en deux ou trois éléments (avec un fond 38 de moule), la conception des deux éléments 22 de moulage est également susceptible de varier.

Comme expliqué précédemment et tel que représenté par simplification sur les figures 1 à 3, l'élément 22 de moulage est réalisé sous la forme d'un demi-moule reçu dans le logement 30 du porte-moule 20 associé.

En variante, l'élément 22 de moulage est divisé en deux parties et d'une conception identique à celle qui est décrite par exemple dans le document EP-B1-0.821.641, c'est-à-dire réalisé en deux pièces distinctes, respectivement une coquille comportant une partie de l'empreinte qui est destiné à être montée et fixée par des moyens de fixation dans un logement d'un porte-coquille. Le porte-coquille est lui-même destiné à être monté et fixé par d'autres moyens de fixation au porte-moule 20.

En conséquence, le terme "élément de moulage" est utilisé dans la présente description de manière générique et englobe notamment les différentes variantes de réalisation d'un moule 18 décrites ci-dessus.

L'unité 12 de moulage comporte, à l'arrière selon la direction longitudinale, des moyens 48 d'articulation des porte-moules 20 formant une charnière par l'intermédiaire de laquelle chaque porte-moule 20 est monté pivotant autour d'un axe O de rotation.

Chaque porte-moule 20 est commandé en rotation autour de l'axe O pivotant par l'intermédiaire d'un dispositif 50 d'ouverture et de fermeture de l'unité 12 de moulage.

Le dispositif 50 d'ouverture/fermeture de l'unité 12 de moulage comporte par exemple des biellettes 52 dont une extrémité est reliée à l'un ou à l'autre des porte-moules 20 et dont l'autre extrémité est raccordée à libre pivotement sur un axe 54 commun d'articulation qui est agencé longitudinalement en arrière des moyens 48 d'articulation de l'unité 12 de moulage.

En agissant par l'intermédiaire de moyens 56 d'actionnement liés à l'axe 54 commun, on provoque via les biellettes 52 soit le rapprochement l'un de l'autre des porte-moules 20 et donc la fermeture de l'unité 12 de moulage, soit l'éloignement des porte-moules 20 l'un de l'autre et donc l'ouverture.

Les porte-moules 20 sont susceptibles de s'écarter mutuellement l'un de l'autre en pivotant autour de l'axe O de rotation déterminé par les moyens 48 d'articulation et cela entre au moins lesdites positions fermée et ouverte de l'unité 12 de moulage.

Les moyens 56 d'actionnement sont par exemple réalisés sous la forme d'un galet 58, notamment destiné à coopérer avec une came complémentaire.

De manière connue, la machine 14 de fabrication comporte notamment une telle came pour commander sélectivement, lors de la fabrication de récipients, l'ouverture ou la fermeture de chaque unité 12 de moulage parcourant la circonférence du carrousel 15.

De préférence, les moyens 56 d'actionnement comportent au moins un levier associé au galet 58 pour former un amplificateur de course.

Le dispositif 50 d'ouverture/fermeture de l'unité 12 de moulage est ainsi commandé en agissant sélectivement sur les moyens 56 d'actionnement associés pour provoquer le déplacement des porte-moules 20 entre les positions ouverte et fermée de l'unité 12 de moulage.

On se reportera par exemple aux documents FR-2.843.714 ou FR-2.653.058 pour de plus amples détails sur la réalisation et le fonctionnement d'un tel dispositif 50 d'ouverture/fermeture d'une unité 12 de moulage.

Chacun desdits au moins deux éléments 22 de moulage du moule 18 est apte à être fixé de manière démontable à l'un des porte-moules 20 associés par l'intermédiaire de moyens 60 de fixation associés.

Avantageusement, les moyens 60 de fixation sont réalisés conformément à la demande de brevet français FR-2.949.703 au nom de la Demanderesse et à laquelle on se reportera pour de plus amples détails.

Selon une caractéristique importante, les moyens 60 de fixation associés sont aptes à être commandés automatiquement, lorsque l'unité 12 de moulage est en position fermée, entre au moins une position de fixation et une position de libération, c'est-à-dire respectivement entre un état de libération et un état de fixation.

La demande de brevet FR-2.949.703 précitée ne constitue cependant qu'un exemple de réalisation de moyens 60 de fixation pour une unité 12 de moulage qui soient des moyens aptes à être commandés automatiquement en une unique opération et simultanément pour les éléments 22 de moulage.

En variante, les moyens 60 de fixation sont réalisés avec des moyens de type mécaniques aptes à être commandés automatiquement entre des positions de libération et de fixation, la fixation étant notamment obtenue par coopération de formes entre des éléments mâle et femelle desdits moyens de fixation.

Grâce aux moyens 60 de fixation associés, les éléments 22 de moulage sont donc, indépendamment de la position ouverte ou fermée de l'unité 12 de moulage, susceptibles d'être libérés ou fixés simultanément par rapport à son porte-moule 20 associé et rapidement dès lors que le changement de position ou d'état est obtenu par une unique opération des moyens commandés associés aux moyens 60 de fixation.

Grâce à de tels moyens 60 de fixation, lesdits au moins deux éléments 22 de moulage sont libérés automatiquement par rapport aux porte-moules 20 associés en commandant des moyens associés aptes à provoquer le changement d'état ou le déplacement des moyens 60 de fixation entre la position de fixation et la position de libération et réciproquement.

Avantageusement, lesdits au moins deux éléments 22 de moulage sont susceptibles d'être maintenus dans ladite position jointe par des moyens destinés à les réunir ensemble pour former un sous-ensemble unitaire transportable, dit moule uni.

Grâce à de tels moyens 60 de fixation, lesdits au moins deux éléments 22 de moulage sont susceptibles d'être libérés (ou fixés) par rapport aux porte-moules 20 occupant la position fermée de l'unité 12 de moulage, et ceci avant ou après la mise en oeuvre des moyens destinés à les réunir ensemble temporairement pour former un sous-ensemble unitaire transportable, dit moule uni.

De préférence, les moyens utilisés pour former ledit moule uni sont mis en place après la libération des éléments 22 de moulage par rapport aux porte-moules 20 qui est obtenue en commandant lesdits moyens 60 de fixation.

Selon la conception de l'unité 12 de moulage et du moule 18 représentés sur les figures, les moyens 60 de fixation associés sont destinés à fixer de manière démontable chaque élément 22 de moulage (ou demi-moule) dans le logement 30 du porte-moule 20 associé.

Conformément aux enseignements de la demande de brevet français FR-2.949.703, les moyens 60 de fixation associés sont des moyens commandés d'aspiration (non représentés) aptes à provoquer, par effet ventouse, la fixation de l'élément 22 de moulage (ou demi-moule) contre la paroi 34 du logement 30 du porte-moule 20 associé.

De tels moyens 60 de fixation permettent de réaliser automatiquement et, par conséquent, rapidement et simplement la fixation ou la libération des éléments 22 de moulage.

Selon ce document, les moyens 60 de fixation comportent des moyens d'aspiration aptes à mettre en dépression une chambre étanche 62 qui, délimitée par un joint 64, est agencée à l'interface entre chaque élément 22 de moulage et le porte-moule 20 associé, entre la paroi externe 32 et la paroi 34 du logement 30.

De préférence, les moyens d'aspiration sont commandés automatiquement pour libérer ou fixer simultanément chaque élément 22 de moulage par rapport au porte-moule 20.

Avantageusement, une assistance à la libération de l'élément 22 de moulage est susceptible d'être obtenue en inversant le sens de fonctionnement des moyens d'aspiration de manière à mettre en surpression la chambre étanche 62 pour garantir le décollement de l'élément 22 de moulage par rapport au porte-moule 20 lors de l'ouverture de l'unité 12 de moulage en vue d'extraire le moule 18 uni préalablement constitué.

Par dépression, on entend une pression inférieure à la pression atmosphérique propre à exercer une force d'attraction suffisante pour maintenir l'élément 22 de moulage fixé au porte-moule 20 et par surpression, une pression supérieure à la pression atmosphérique afin de garantir la séparation.

De préférence, l'unité 12 de moulage comporte un dispositif 70 de verrouillage de l'unité 12 de moulage comportant au moins des moyens 66 de verrouillage des porte-moules 20 et un organe 68 de commande associé auxdits moyens 66.

Le dispositif 70 de verrouillage est agencé en partie avant des porte-moules 20, soit longitudinalement à l'opposé de l'axe O de rotation et du dispositif 50 d'ouverture/fermeture de l'unité 12 de moulage.

Le dispositif 70 de verrouillage est destiné à assurer le verrouillage des deux porte-moules 20 en position fermée, à titre d'exemple on rappellera que les pressions finales de soufflage peuvent atteindre des valeurs de 40 bars.

Le dispositif 70 de verrouillage comporte par exemple deux demi-verrous respectivement de type mâle et de type femelle qui sont associés aux porte-moules 20 et aptes à coopérer mutuellement pour maintenir l'unité 12 de moulage en position fermée.

Le dispositif 70 de verrouillage a notamment pour fonction de prévenir, en mode de production, toute ouverture inopinée lors des opérations de formage, en particulier par soufflage ou par étirage-soufflage.

Le dispositif 70 de verrouillage de l'unité 12 de moulage comporte au moins un organe 68 de commande en déplacement des moyens 66 de verrouillage qui sont montés mobiles entre :
- une position verrouillée dans laquelle les porte-moules 20 de l'unité 12 de moulage sont maintenus en position fermée par lesdits moyens 66 de verrouillage, et
- une position déverrouillée dans laquelle les porte-moules 20 sont libres d'être déplacés entre la position fermée et la position ouverte de l'unité 12 de moulage.

L'organe 68 de commande est par exemple constitué par un galet porté par un arbre coulissant, représenté schématiquement en pointillé sur les figures, pour commander les moyens 66 de verrouillage du dispositif 70 de verrouillage entre lesdites positions verrouillée et déverrouillée.

Avantageusement, le dispositif 70 de verrouillage comporte des moyens 72 de rappel élastique (représentés schématiquement en pointillé sur les figures) qui sont aptes à rappeler automatiquement les moyens 66 de verrouillage vers la position verrouillée.

Pour de plus amples détails sur la structure et le fonctionnement d'un tel dispositif 70 de verrouillage, on pourra se reporter au document FR-2.646.802 décrivant un exemple de verrou pour une unité 10 de moulage.

On décrira maintenant un mode de réalisation préféré du système 10 d'assistance et plus particulièrement du dispositif 16 de transport d'un moule 18 uni mis en œuvre pour opérer le changement de moule d'une unité 12 de moulage de type en portefeuille telle que décrite en référence aux figures 1 à 3.

Selon l'invention, la machine 14 comporte un système 10 d'assistance au changement de moule comportant au moins un dispositif 16 de transport d'un moule 18, dit moule uni.

Par définition, un moule 18 uni est constitué lorsque lesdits au moins deux éléments 22 de moulage sont maintenus dans ladite position jointe par des moyens destinés à les réunir ensemble pour former un sous-ensemble unitaire transportable.

Avantageusement, les éléments 22 de moulage du moule 18, avec ou sans fond 38 de moule, forment alors temporairement un bloc compact dont les éléments unis par lesdits moyens ne peuvent se séparer, en particulier lors des déplacements survenant au cours d'un changement de moule.

Le dispositif 16 de transport comporte au moins une tête 74 qui comporte des moyens 76 de manipulation aptes à coopérer avec au moins un moule 18 uni de manière à procéder à l'extraction d'un moule uni hors de porte-moules 20 occupant la position ouverte de l'unité 12 de moulage et/ou à l'introduction d'un moule uni entre lesdits porte-moules 20 occupant la position ouverte de l'unité 12 de moulage.

Avantageusement, le système 10 d'assistance au changement de moule est apte à être mis sélectivement dans un état d'utilisation qui est associé à un mode de fonctionnement, dit d'intervention, de la machine 14 de fabrication, ledit mode d'intervention étant notamment destiné à permettre de procéder au changement de moule de tout ou partie des unités 12 de moulage de la machine 14 de fabrication de récipients.

La machine 14 est donc à l'arrêt en ce sens que la production de récipients cesse dans un tel mode d'intervention, pour autant le carrousel 15 demeure susceptible d'être entraîné en rotation en particulier pour amener l'une des unités 12 de moulage dans une position déterminée de référence en vue de procéder au changement du moule 18 de ladite unité 12 de manière automatisé grâce au système 10 d'assistance selon l'invention.

Le système 10 d'assistance au changement de moule est également apte à être mis sélectivement dans un état de veille qui est associé à un mode de fonctionnement, dit de production, de la machine 14 de fabrication de récipients au cours duquel le système d'assistance n'est pas utilisé et n'interfère pas avec la machine 14 produisant des récipients.

Les moyens 76 de manipulation comportent au moins un organe 78 principal de préhension destiné à coopérer avec une première partie 80 du moule 18 uni qui est accessible audit organe 78 principal de préhension alors que l'unité 12 de moulage est en position fermée.

L'organe 78 principal de préhension est choisi pour assurer au moins la fonction de préhension du moule 18 uni lors des opérations d'extraction ou d'introduction et plus généralement lors du transport dudit moule 18 uni, par exemple entre l'unité 12 de moulage et des moyens de stockage d'un tel moule 18 uni.

De préférence, ledit au moins un organe principal de préhension est constitué par une pince 78 principale, ici supérieure, qui est apte à saisir ladite première partie 80 du moule 18 uni.

Avantageusement, la pince 78 principale constitue un organe qui est non seulement apte à assurer la fonction précitée de préhension du moule 18 uni mais qui est aussi apte à assurer la fonction de maintenir ensemble, temporairement, au moins les éléments 22 de moulage pour former le sous-ensemble unitaire transportable, c'est-à-dire ledit moule 18 uni.

De préférence, les moyens destinés à réunir ensemble lesdits au moins deux éléments 22 de moulage pour former le moule 18 uni sont donc constitués par au moins la pince 78 principale.

Avantageusement, ladite première partie 80 du moule 18 uni est constituée par la partie sommitale du moule 18 comportant la face 24 supérieure et l'ouverture 26 centrale pour le col de la préforme.

C'est la raison pour laquelle, la partie 80 sommitale du moule 18 est accessible à l'organe 78 principal alors que l'unité 12 de moulage occupe la position fermée.

Avantageusement, la première partie 80 du moule 18 fait saillie hors de l'unité 12 de moulage lorsque ladite unité 12 occupe la position fermée et comporte au moins un logement 82 complémentaire de l'organe 78 principal de préhension.

La préhension par la pince 78 principal de la partie 80 sommitale du moule 18 s'en trouve alors facilitée et simplifiée et est par conséquent réalisée rapidement.

La pince 78 principale de préhension comporte au moins deux mors 84 qui sont montés mobiles entre au moins :
- une première position, dite active, dans laquelle les mors 84 sont rapprochés l'un de l'autre pour coopérer avec la partie 80 correspondante du moule 18 uni ;
- une deuxième position, dite passive, dans laquelle les mors 84 sont écartés l'un de l'autre pour permettre l'engagement ou le dégagement des mors 84 par rapport à la partie 80 correspondante du moule 18 uni.

En position active, les mors 84 de la pince 78 principale sont reçus et pénètrent avantageusement dans le logement 82.

Avantageusement, les mors 84 de la pince 78 principale exercent un effort de serrage sur la partie 80 du moule 18, plus précisément ici l'effort est appliqué perpendiculairement au plan de joint, soit selon la direction transversale, de manière à garantir le maintien des éléments 22 de moulage en position jointe.

De préférence, au moins l'un desdits mors 84 de la pince 78 principale de préhension est monté mobile, entre lesdites première et deuxième positions, suivant un mouvement de translation par rapport à l'autre mors, le déplacement s'effectuant globalement selon une direction transversale.

En variante, au moins l'un desdits mors 84 de la pince 78 principale de préhension est monté mobile, entre lesdites première et deuxième positions, suivant un mouvement de rotation autour d'un axe d'orientation verticale.

Avantageusement, les deux mors 84 de la pince 78 principale de préhension sont ici montés coulissant entre lesdites première et deuxième positions par l'intermédiaire de moyens de support 86 qui sont fixes par rapport à la tête 74 du dispositif 16 de transport.

En variante, la pince 78 principale de préhension est montée mobile par rapport à la tête 74 du dispositif 16 de transport, par exemple en rotation et/ou en translation entre au moins une position escamotée et une position avancée.

Le logement 82 est par exemple réalisé sous la forme d'une rainure circulaire s'étendant circonférentiellement sur tout ou partie de la partie 80 sommitale du moule 18.

Avantageusement, les mors 84 pénètrent au moins en partie dans la rainure 82 et une portion de la partie 80 sommitale du moule 18 surplombant ladite rainure 82 coopère de préférence avec la face supérieure des mors 84 qui, indépendamment de l'application d'un effort de serrage, supporte le poids du moule 18.

Lors des déplacements effectués au cours du changement de moule, le moule uni 18 est suspendu à l'organe 78 principal.

De préférence, les moyens 76 de manipulation comportent au moins un organe 88 secondaire de préhension destiné à coopérer avec une seconde partie 90 du moule 18 uni qui est accessible uniquement lorsque l'unité 12 de moulage est en position ouverte.

La seconde partie 90 du moule a été matérialisée à la figure 4 au moyen de points et est avantageusement située verticalement entre le milieu et la partie inférieure du moule 18, en dessous du centre de gravité.

Avantageusement, ledit au moins un organe secondaire de préhension est constitué par une pince 88 secondaire, dite inférieure, apte à saisir ladite seconde partie 90 du moule 18 uni.

La pince 88 secondaire permet d'assurer une préhension supplémentaire du moule 18 uni dès lors que la pince 78 principale coopérant avec la partie 80 sommitale du moule est éloignée du centre de gravité du moule.

La pince 88 secondaire permet donc de prévenir tout écartement des éléments 22 de moulage au voisinage de la partie inférieure du moule 18 uni et cela tout particulièrement lorsque le moule 18 est du type comportant un fond 38 de moule.

La pince 88 secondaire de préhension comporte au moins deux mors 92 qui sont montés mobiles entre au moins :
- une première position, dite active, dans laquelle les mors 92 sont rapprochés l'un de l'autre pour coopérer avec la seconde partie 90 correspondante du moule 18 uni ;
- une deuxième position, dite passive, dans laquelle les mors 92 sont écartés l'un de l'autre pour permettre l'engagement ou le dégagement des mors 92 par rapport à la seconde partie 90 correspondante du moule 18 uni.

Avantageusement, les mors 92 de la pince 88 secondaire exerce un effort de serrage sur la partie 90 du moule 18 uni de manière à maintenir les éléments 22 de moulage en position jointe.

De préférence, la pince 78 principale et la pince 88 secondaire exercent un effort de serrage et ce faisant constituent lesdits moyens permettant de former un sous ensemble unitaire transportable, soit ledit moule uni, en maintenant ensemble au moins les éléments 22 de moulage, avec ou sans fond de moule.

En variante, une seule pince 78 formant les moyens 76 de manipulation exerce un tel effort sur le moule 18.

Avantageusement, l'effort de serrage appliqué par les mors 92 de la pince 88 secondaire est appliqué orthogonalement au plan de joint du moule 18 de manière à plaquer l'une contre l'autre chacune des faces de joint 28 des éléments 22 de moulage.

Lorsque le moule 18 comporte un fond 38 de moule, le fond 38 de moule est alors immobilisé par coopération de formes entre sa partie 44 mâle (nervure) et la partie 46 femelle (rainure) de chaque élément 22 de moulage et est alors apte à être transporté d'un bloc avec les éléments 22 de moulage.

En variante non représentée, lorsque le fond de moule ne comporte pas de moyens par coopération de formes du type nervure 44 / rainure 46, il est avantageusement prévu des moyens supplémentaires aptes à maintenir le fond de moule en position, en particulier en vue de son transport.

De préférence, au moins l'un desdits mors 92 de la pince 88 secondaire de préhension est monté mobile, entre lesdites première et deuxième positions, suivant un mouvement de translation par rapport à l'autre mors, le déplacement des mors 92 s'effectuant selon une direction transversale.

En variante, au moins l'un desdits mors 92 de la pince 88 secondaire de préhension est monté mobile, entre lesdites première et deuxième positions, suivant un mouvement de rotation autour d'un axe d'orientation verticale.

La forme des mors 92 de la pince 88 secondaire comme la cinématique d'ouverture/fermeture des mors 92 pour occuper la première position active ou la deuxième position passive est plus particulièrement déterminée en fonction de la position occupée par le moule 18 uni lorsque les mors 92 de la pince viennent enserrer ou s'écarter de la partie 90 du moule.

De préférence, les mors 92 sont montés mobiles en translation et ont au moins pour l'un d'eux un profil et une forme étudiée (voir figure 4), notamment les mors 92 présentent un faible encombrement selon la direction transversale en raison de ce que l'unité 12 de moulage de type portefeuille en position ouverte constitue un environnement exigu de travail pour positionner la pince 88 secondaire.

Avantageusement, les deux mors 92 de la pince 88 secondaire de préhension sont ici montés coulissant entre lesdites première et deuxième positions par l'intermédiaire de moyens 94 de support.

Avantageusement, la pince 88 secondaire de préhension est montée mobile par rapport à l'organe 78 principal de préhension de manière à pouvoir décaler les pinces 78 et 88 l'une par rapport à l'autre selon la direction longitudinale.

De préférence, la pince 78 principale étant fixe par rapport à la tête 74, la pince 88 secondaire de préhension est ici montée mobile par rapport à la tête 74 du dispositif 16 de transport.

Les moyens 94 de support de la pince 88 secondaire de préhension sont montés mobiles par rapport à la tête 74, par exemple aptes à coulisser selon la direction longitudinale, soit d'avant en arrière et réciproquement.

Avantageusement, la pince 88 secondaire de préhension est susceptible d'être déplacée librement vers la première position active, sans déplacement de la tête 74 du dispositif 16 de transport occupant une position déterminée et donc indépendamment de la pince 78 principale et de la position active ou passive occupée par ladite pince 78 principale.

La pince 88 secondaire de préhension est montée mobile entre au moins :
- une position escamotée dans laquelle la pince 88 secondaire est en retrait longitudinalement par rapport à la pince 78 principale de préhension ;
- une position avancée, dite de travail, dans laquelle la pince 88 secondaire de préhension est apte à coopérer avec la seconde partie 90 du moule uni.

On évite tout contact entre la pince 88 secondaire de préhension et les porte-moules 20 lorsque l'unité 12 de moulage est ouverte après la mise en place dans la première position active de la pince 78 principale de préhension, c'est-à-dire dans le cas ou la pince 78 principale de préhension constitue au moins une partie desdits moyens destinés à réunir ensemble lesdits au moins deux éléments 22 de moulage pour former le moule uni.

Avantageusement, la pince 88 secondaire de préhension est apte à être commandée sélectivement en déplacement entre lesdites positions escamotée et avancée.

En variante, la pince 88 secondaire de préhension est montée mobile entre lesdites positions escamotée et avancée suivant une autre cinématique qu'un coulissement selon la direction longitudinale, par exemple en rotation.

De préférence, la pince 78 principale supérieure et/ou la pince 88 secondaire inférieure sont des pinces qui sont commandées sélectivement en ouverture et en fermeture.

En variante, l'ouverture de la pince 78, 88 est obtenue en engageant à force les mors autour de la partie correspondante du moule 18 de manière à en provoquer l'écartement à l'encontre de moyens de rappel élastique des mors vers la première position active. De préférence, les moyens de rappel élastique sont distincts des mors, en variante les moyens de rappel élastique sont constitués par les mors eux-mêmes.

Avantageusement, les moyens destinés à réunir ensemble lesdits au moins deux éléments 22 de moulage pour former le moule 18 uni sont constitués par les moyens 76 de manipulation, c'est-à-dire l'organe 78 principal et/ou l'organe 88 secondaire.

Les moyens 76 de manipulation assurent ainsi une double fonction, celle tout d'abord des moyens permettant de former du moule 18 uni et celle ensuite de moyens assurant la préhension dudit moule 18 uni pour en permettre la manipulation et tout particulièrement le transport lors du changement de moule.

Grâce à de tels moyens, une fois lesdits au moins deux éléments 22 de moulage libérés des porte-moules 20 en commandant les moyens 60 de fixation vers la position de libération, lesdits au moins deux éléments 22 de moulage (enserrant ou non un fond 38 de moule) forment le moule 18 uni soit un sous-ensemble unitaire transportable par la tête 74 du dispositif 16 de transport.

En variante, les moyens destinés à réunir ensemble lesdits au moins deux éléments 22 de moulage pour former le moule 18 uni sont constitués par des moyens distincts des moyens 76 de manipulation tels que des moyens de blocage temporaire des éléments 22 de moulage.

Selon une telle variante, les moyens de blocage coopèrent de préférence avec la partie 80 du moule 18 et les moyens de blocage sont choisis pour pouvoir être mis en place automatiquement, sans intervention d'un opérateur.

Par comparaison avec une telle variante, le mode de réalisation préféré de l'invention selon lequel les moyens destinés à réunir ensemble lesdits au moins deux éléments 22 de moulage pour former le moule 18 uni sont formés par l'organe 78 principal de préhension et/ou l'organe 88 secondaire de préhension, a pour avantage de ne pas nécessiter de moyens supplémentaires pour assurer la seule fonction de formation du moule uni.

Grâce à quoi, le dispositif 16 de transport du système est apte à procéder de manière plus rapide au changement du moule, du fait de la réduction du nombre d'opérations nécessaires.

Avantageusement, la tête 74 du dispositif 16 de transport comporte des moyens 76 de manipulation qui sont doublés.

Tel que représenté à la figure 4, la tête 74 comporte respectivement des premiers moyens 76A de manipulation et des deuxièmes moyens 76B de manipulation qui sont identiques et agencés de part et d'autre de la tête 74.

Lesdits premiers et deuxièmes moyens 76A, 76B de manipulation comportent respectivement un organe 78 principal de préhension et un organe 88 secondaire de préhension.

Avantageusement, la tête 74 est montée mobile en rotation autour d'un axe A de rotation de manière à pouvoir présenter sélectivement l'un ou l'autre desdits premiers et deuxièmes moyens 76A, 76B de manipulation d'un moule 18 uni.

Grâce aux double moyens de manipulation 76A et 76B, les opérations d'extraction et d'introduction d'un moule 18 uni sont susceptibles d'être immédiatement mises en œuvre l'une après l'autre, la tête 74 pouvant comporter deux moules 18 uni.

Par comparaison, une tête 74 équipée d'une seule paire de pinces 78 et 88 formant les moyens 76 de manipulation ne pourrait effectuer ces mêmes opérations sans perdre de temps dès lors qu'au moins un déplacement de va et vient de la tête 74 est nécessaire faute de pouvoir transporter simultanément deux moule 18 uni.

En effet, une fois l'extraction d'un moule 18 uni opérée par les premiers moyens 76A de manipulation de la tête 74, une simple rotation de la tête 74 permet alors de présenter, face à l'unité 12 de moulage en position ouverte, les deuxièmes moyens 76B de manipulation portant un autre moule 18 uni.

Avantageusement, ledit autre moule 18 uni a été préalablement pris en charge pour que la tête 74 puisse réaliser l'introduction dudit autre moule 18 uni immédiatement après l'extraction.

Avantageusement, on limite les déplacements de va-et-vient de la tête 74 du dispositif 16 de transport par rapport à l'unité 12 de moulage et ce faisant on réduit encore le temps nécessaire au changement de moule d'une unité 12 de moulage.

De préférence, la tête 74 est montée mobile dans l'espace, selon au moins deux dimensions du trièdre (X, Y, Z), avantageusement selon les trois dimensions du trièdre (X, Y, Z).

En effet, le dispositif 16 de transport est alors plus flexible et apte à travailler sur différents types d'unité 12 de moulage, les déplacements pour réaliser l'introduction ou l'extraction étant plus ou moins complexe, notamment en raison de l'écartement plus ou moins important des porte-moules 20 en position ouverte de l'unité 12 de moulage.

Avantageusement, le dispositif 16 de transport selon l'invention comporte un bras 96 robotisé apte à coopérer avec la tête 74 pour positionner les moyens 76 de manipulation par rapport à l'unité 12 de moulage pour opérer un changement de moule.

Un tel bras 96 robotisé, de préférence un robot "6 axes" en variante au moins "3 axes", est apte à positionner avec précision les moyens 76 de manipulation de la tête 74 par rapport au moule 18 uni dans les trois dimensions du trièdre (X, Y, Z).

Avantageusement, les mors 84 de la pince 78 principale présentent avec le logement 82 des formes complémentaires aptes à garantir, par coopération entre elles, un bon positionnement des mors 84, c'est-à-dire une fonction de centrage des mors 84 par rapport au logement 82 du moule 18 uni.

Avantageusement, l'utilisation du bras 96 robotisé permet d'obtenir une position très précise dans l'espace des moyens 76 de manipulation et d'effectuer, avec la tête 74 qui lui est associée et transporte au moins un moule 18 uni, les déplacements complexes imputables à l'exiguïté du passage entre les porte-moules 20 occupant la position ouverte d'une telle unité 12 de moulage de type en portefeuille.

Le bras 96 robotisé est notamment apte à prélever ou ranger un moule 18 uni dans un logement 98 complémentaire que comporte des moyens de stockage associés au dispositif.

De préférence, les moyens de stockage des moules 18 sont susceptibles d'être facilement déplacés, de manière automatisé ou non, pour venir se placer dans une zone déterminée par rapport au bras 96 robotisé du dispositif 16 de transport ou pour la quitter.

En variante, le système 10 d'assistance comporte deux dispositifs 16 de transport, chaque dispositif 16 de transport comportant une tête 74 coopérant avec un bras robotisé et qui est pourvue de moyens 76 de manipulation.

De préférence, les deux dispositifs 16 de transport sont commandés pour faire travailler leur tête 74 successivement l'une après l'autre, par exemple en opposition, la première tête 74 exécutant une extraction d'un moule 18 uni tandis que la seconde tête 74 se saisit d'un nouveau moule 18 uni à mettre en service dans l'unité 12 de moulage. Ainsi lorsque la deuxième tête 74 procède à l'introduction du nouveau moule 18 uni dans l'unité 12, la première tête 74 se dessaisit du moule 18 uni extrait.

Avantageusement, chaque dispositif 16 de transport travaille alors en temps masqué par rapport à l'autre dispositif 16 de transport afin de réduire le temps total nécessaire pour procéder au changement de moule d'une unité 12 de moulage.

Tel que décrit précédemment en référence aux figures 1 à 3, l'unité 12 de moulage comporte au moins un dispositif 50 d'ouverture/fermeture de l'unité 12 de moulage.

De préférence, l'unité 12 de moulage comporte également un dispositif 70 de verrouillage de l'unité 12 de moulage comportant au moins un organe 68 de commande apte à actionner les moyens 66 de verrouillage entre les positions verrouillée et déverrouillée.

Avantageusement, le système 10 d'assistance comporte un module 100 d'assistance qui, associé audit dispositif 16 de transport, comporte des moyens d'actionnement aptes à provoquer sélectivement au moins l'ouverture ou la fermeture de l'unité 12 de moulage.

Le module 100 d'assistance est par exemple agencé en dessous de l'unité 12 de moulage dans une zone déterminée de la machine 14 de fabrication.

De préférence, le module 100 d'assistance du système 10 comporte des moyens d'actionnement aptes à commander sélectivement les moyens 66 de verrouillage du dispositif 70 de verrouillage entre lesdites positions verrouillée et déverrouillée.

De préférence, le module 100 d'assistance du système est réalisé conformément aux enseignements de la demande de brevet FR-2.954.207 au nom de la Demanderesse à laquelle on se reportera pour de plus amples détails tant sur la structure, que le fonctionnement d'un tel module d'assistance.

Selon les enseignements de ce document, le module 100 d'assistance comporte au moins un organe de manœuvre destiné à coopérer sélectivement avec l'organe 68 de commande du dispositif 70 de verrouillage, d'une part, pour provoquer le déplacement des moyens 66 de verrouillage vers au moins l'une desdites positions verrouillée ou déverrouillée et, d'autre part, pour provoquer le déplacement des porte-moules 20 vers l'une desdites positions ouverte ou fermée de l'unité 12 de moulage.

En variante, le module 100 d'assistance comporte respectivement des premiers moyens d'actionnement associés au dispositif 70 de verrouillage de l'unité 12 et des deuxièmes moyens d'actionnement, distincts des premiers moyens d'actionnement, associés au dispositif 50 d'ouverture/fermeture.

Dans une telle variante, l'ouverture ou la fermeture sont de préférence obtenues en agissant sur l'organe de commande, tel que le galet 58, du dispositif 50 d'ouverture/fermeture pour provoquer le déplacement des porte-moules 20 de l'unité 12 de moulage autour de l'axe O de rotation.

En l'absence de dispositif 70 de verrouillage de l'unité 12 de moulage, le module 100 d'assistance comporte uniquement des moyens d'actionnement aptes à commander sélectivement l'ouverture et la fermeture de l'unité 12 de moulage.

Grâce à l'utilisation de moyens 60 de fixation perfectionnés, tels que les moyens commandés d'aspiration, les opérations de libération ou de fixation des éléments 22 de moulage aux porte-moules 20 sont automatisées et avantageusement commandées sans requérir l'intervention directe d'un opérateur sur l'unité 12 de moulage.

En effet, les moyens 60 de fixation sont commandés automatiquement entre les positions ou états de fixation et de libération et cela alors que l'unité 12 de moulage est en position fermée.

Avantageusement, le système 10 d'assistance au changement de moule comporte un dispositif 16 de transport et un module 100 d'assistance grâce à quoi une automatisation de l'ensemble des opérations est obtenue et cela au bénéfice d'un temps total de changement de moule d'une unité 12 de moulage particulièrement réduit.

En effet, le module 100 d'assistance permet d'automatiser au moins les opérations d'ouverture et de fermeture de l'unité 12 de moulage, et le cas échéant également les opérations de déverrouillage précédant l'ouverture (ou de verrouillage succédant à la fermeture) lorsque l'unité 12 de moulage comporte un dispositif 70 de verrouillage.

Avantageusement, le dispositif 16 de transport et les moyens 76 de manipulation portés par une tête 74 positionnée au moyen d'un bras 96 robotisé permettent, en combinaison avec les moyens 60 de fixation, de réduire les opérations qui auparavant se succédaient pour procéder au démontage ou au montage des éléments 22, 38 du moule 18 à une seule opération avec un moule uni et ce faisant d'automatiser les opérations d'extraction ou d'introduction d'un tel moule 18 uni.

Avantageusement, le système 10 d'assistance comporte une unité de contrôle (non représentée) apte à piloter respectivement en synchronisation, les moyens de fixation commandés, les moyens d'actionnement du module 100 d'assistance pour commander au moins l'ouverture et la fermeture de l'unité 12 de moulage et le dispositif 16 de transport d'un moule 18 uni, en particulier le bras robotisé 96, la tête 74 mobile et les moyens 76 de manipulation.

On décrira maintenant, selon le mode de réalisation préféré et en référence aux figures 5 à 10, le fonctionnement d'un tel système 10 d'assistance au changement de moule grâce auquel l'ensemble des opérations nécessaires au changement de moule d'une unité 12 de moulage est entièrement automatisé.

Avantageusement, le système 10 d'assistance comporte une unité de contrôle qui pilote en synchronisation l'ensemble des moyens mis en œuvre pour procéder au changement de moule de l'unité 12 de moulage, soit principalement les moyens de fixation, les moyens d'actionnement du module 100 d'assistance et le dispositif 16 de transport.

Tel que représenté sur la figure 5, le dispositif 16 de transport du système 10 d'assistance est à l'état de veille.

La machine 14 de fabrication est commandée pour passer du mode de fonctionnement, dit de production, correspondant à l'état de veille du dispositif 16 au mode de fonctionnement, dit d'intervention, correspondant à l'état d'utilisation du dispositif 16 de transport du système 10 d'assistance.

Une unité 12 de moulage est positionnée, en entraînant en rotation le carrousel 15, dans une position de référence déterminée par rapport au dispositif 16 de transport et au module 100 d'assistance.

Le bras 96 robotisé du dispositif 16 de transport est piloté par l'unité de contrôle pour que la tête 74 se positionne et se saisisse d'un moule 18 en position jointe se trouvant en attente dans un logement 98 des moyens 102 de stockage associés.

Tel que représenté sur la figure 6, un moule 18 uni est saisi par les moyens 76A de manipulation de la tête 74.

Plus précisément, la tête 74 est positionnée par rapport au moule 18 de manière que la pince 78 principale, fixée longitudinalement par rapport à la tête 74, puisse se saisir de la partie 80 sommitale du moule 18.

Une fois la pince 78 principale en position, l'unité de contrôle commande la pince 78 principale pour provoquer le déplacement des mors 84 de la deuxième position inactive, jusqu'alors occupée, vers la première position active.

Les mors 84 se positionnent alors dans le logement 82 et, exerçant avantageusement un effort de serrage sur les éléments 22 de moulage, réunissent ensemble lesdits au moins deux éléments 22 de moulage pour former le moule 18 uni.

La pince 88 secondaire est également commandée en déplacement de la position escamotée vers la position avancée et ce alors que les mors 92 de la pince 88 secondaire occupent la deuxième position inactive. Puis, une fois positionnée autour du moule 18, la pince 88 est commandée pour provoquer le déplacement des mors 92 vers la première position active dans laquelle lesdits mors 92 exercent de préférence également un effort de serrage sur la partie 90 du moule 18 uni.

Le bras 96 robotisé est alors commandé pour extraire le moule 18 uni du logement 98 puis est déplacé pour positionner la tête 74 telle qu'illustré sur la figure 7, soit de manière que les deuxièmes moyens 76B de manipulation de la tête 74 fassent face à l'unité 12 de moulage préalablement positionnée dans ladite position de référence et dont il va être procédé au changement du moule 18.

L'unité de contrôle commande en déplacement le bras 96 robotisé pour positionner la tête 74 de manière que la pince 78 principale soit apte à se saisir de la partie 80 du moule qui fait saillie hors de l'unité 12 de moulage occupant la position fermée.

Les mors 84 de la pince 78 principale sont alors commandés en déplacement de la première position inactive vers la deuxième position active de manière que au moins une partie des mors 84 pénètre dans le logement 82 et exerce un effort de serrage sur les éléments 22 de moulage pour former un moule 18 uni.

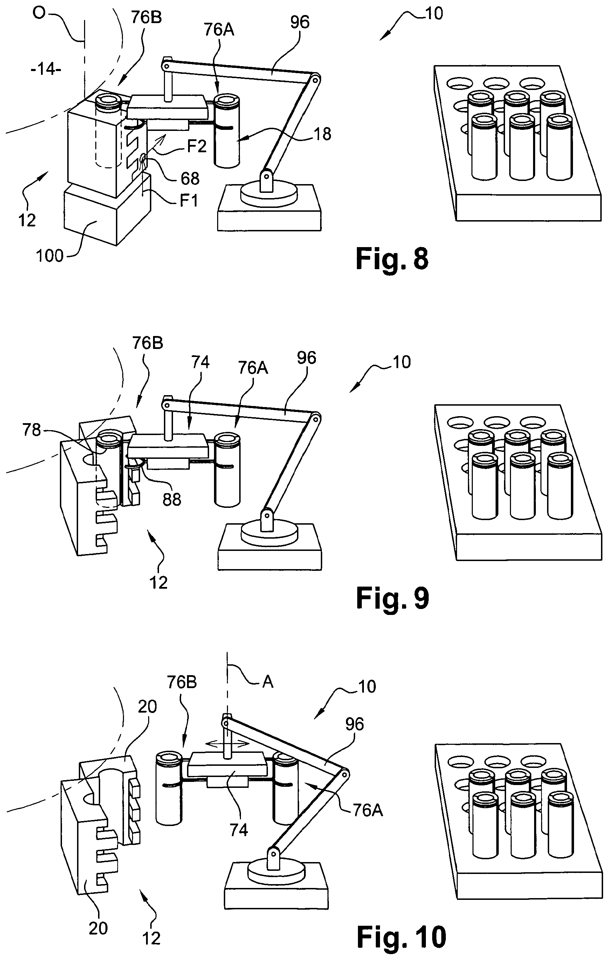

La pince 78 principale occupe alors la position représentée à la figure 8.

L'unité de contrôle commande les moyens 60 de fixation pour libérer les éléments 22 de moulage occupant la position jointe dans l'unité 12 de moulage en position fermée, la libération étant réalisée avant ou après la mise en place des mors 84 de la pince 78.

L'unité de contrôle commande alors les moyens d'actionnement du module 100 d'assistance pour provoquer tout d'abord le déverrouillage. Le déverrouillage est obtenu par l'organe de manœuvre du module qui agit selon un effort F1 selon la direction verticale, du bas vers le haut, sur l'organe de commande 68 du dispositif 70 de verrouillage pour provoquer le déplacement des moyens 66 de verrouillage de la position verrouillée à la position déverrouillée et cela à l'encontre de l'organe 72 de rappel élastique.

L'organe de manœuvre du module 100 d'assistance exerce ensuite un effort F2 selon la direction transversale sur l'organe 68 de commande qui provoque l'ouverture de l'unité 12 de moulage.

Ainsi, les porte-moules 20 pivotent par les moyens 48 d'articulation autour de l'axe O de rotation jusqu'à atteindre la position ouverte de l'unité 12 de moulage telle que représentée sur la figure 9.

De préférence, le module 100 d'assistance comporte des moyens complémentaires d'actionnement aptes à désolidariser les moyens de support 42 (ou sellette) du fond 38 de moule, ainsi que les alimentations fluidiques de manière que soit libre le fond 38 de moule enserré par les deux éléments 22 de moulage.

De préférence, le moule 18 uni demeure en position et est supporté par la seule pince 78 principale.

La pince 88 secondaire est alors commandée en déplacement, de sa position escamotée vers sa position avancée, pour positionner les mors 92 autour de la partie 90, une fois positionnés, l'unité de contrôle commande en déplacement les mors 92 de la position inactive vers la position active.

En variante, lorsque la conception de l'unité 12 de moulage ne permet pas une telle mise en place de la pince 88 secondaire ou pour un gain de temps, le bras 96 robotisé est commandé pour que la tête 74 procède à l'extraction du moule 18 uni et la pince 88 secondaire n'est mise en place qu'après ladite extraction du moule 18 uni hors de l'unité 12 de moulage.

Le dispositif 16 de transport occupe alors la position représentée sur la figure 10.

L'unité de contrôle commande alors la tête 74 en rotation autour de l'axe A pour permuter les moyens 76A et 76B de manipulation.

Ainsi, le moule 18 uni extrait et porté par les deuxièmes moyens 76B de manipulation est déplacé afin de présenter, face à l'unité 12 de moulage occupant la position ouverte, l'autre moule 18 uni, soit celui avantageusement pris en charge au préalable par les premiers moyens 76A de manipulation (figure 6).

La première phase des opérations de changement de moule est alors terminée, le moule 18 uni ayant été extrait.

Une deuxième phase débute alors pour introduire un autre moule 18 uni, pour ce faire l'unité de contrôle commande à nouveau les différents moyens du système 10 d'assistance, les étapes qui viennent d'être décrites étant réalisées en ordre inverse.

L'unité de contrôle commande le bras 96 robotisé pour que la tête 74 introduise le nouveau moule 18 uni entre les porte-moules 20 de l'unité 12 de moulage, la pince 88 secondaire est alors déplacée (si cela n'a pas été fait préalablement à l'introduction) vers sa position escamotée après en avoir préalablement commandé les mors 92 de la première position active vers la deuxième position inactive.

L'unité de contrôle commande alors le module 100 d'assistance et plus particulièrement l'organe de manœuvre pour provoquer la fermeture de l'unité 12 de moulage et le verrouillage.

Le verrouillage est obtenu automatiquement lors de la fermeture car les moyens 66 de verrouillage sont avantageusement libérés et rappelés vers la position de verrouillage par l'organe 72 de rappel élastique.

Les moyens 42 de support sont également remis en place automatiquement pour fixer et raccorder le fond 38 de moule.

L'unité de contrôle pilote alors les moyens commandés en dépression pour établir une dépression dans la chambre 62 apte à provoquer l'effet ventouse grâce auquel la fixation des éléments 22 de moulage aux porte-moules 20 est obtenue.

Avant ou après la fixation des éléments 22 de moulage, la pince 78 principale est commandée par l'unité de contrôle pour en déplacer les mors 84 vers la deuxième position inactive, puis la tête 74 est déplacée par le bras 96 robotisé, par exemple directement vers la position représentée à la figure 6 pour aller se saisir d'un nouveau moule 18 et procéder au changement de moule de l'unité 12 de moulage suivante.

Pendant l'ensemble des opérations qui viennent d'être décrite, l'unité 12 de moulage demeure immobile et occupe la position de référence déterminée dans laquelle l'unité 12 est amenée (figure 5).

## Revendications

1. Système (10) d'assistance au changement de moule et unité (12) de moulage, le système (10) d'assistance au changement de moule étant destiné à être mis en œuvre pour changer au moins un moule (18) de l' unité (12) de moulage équipant une machine (14) de fabrication de récipients par formage, au moyen d'au moins un fluide sous pression, d'une préforme en matière plastique préalablement conditionnée thermiquement,
ladite unité (12) de moulage comportant au moins:
- deux porte-moules (20) qui sont montés mobiles entre au moins une position ouverte et une position fermée de l'unité (12) de moulage, et
- un moule (18) comportant au moins deux éléments (22) de moulage susceptibles d'être réunis pour occuper une position jointe ou d'être séparés pour occuper une position disjointe,
dans lequel ledit système (10) d'assistance comporte au moins un dispositif (16) de transport d'un moule (18) formant un sous-ensemble unitaire transportable, dit moule uni, ledit dispositif (16) de transport comportant au moins un bras (96) robotisé pour positionner dans l'espace par rapport à l'unité (12) de moulage, des moyens (76) de manipulation d'au moins un moule (18) uni de manière à opérer un changement dudit au moins un moule (18) de ladite unité (12) de moulage
**caractérisé en ce que** chacun desdits au moins deux éléments (22) de moulage du moule (18) est apte à être fixé de manière démontable à l'un des porte-moules (20) associés par l'intermédiaire de moyens (60) de fixation associés, lesquels moyens (60) de fixation associés sont aptes à être commandés lorsque l'unité (12) de moulage est en position fermée entre au moins une position de fixation et une position de libération,
**en ce que** lesdits moyens (76) de manipulation comportent au moins un organe (78) principal de préhension destiné à coopérer avec une première partie (80) du moule (18) uni qui est accessible audit organe (78) principal de préhension alors que l'unité (12) de moulage est en position fermée,
et **en ce que** ledit bras (96) robotisé est conçu pour positionner dans l'espace lesdits moyens (76) de manipulation, par rapport à l'unité (12) de moulage selon un trièdre (X, Y, Z).

2. Système d'assistance selon la revendication 1, **caractérisé en ce que** ledit dispositif (16) de transport comporte au moins une tête (74) qui, associée audit bras (96) robotisé, comporte lesdits moyens (76) de manipulation coopérant avec au moins un moule (18) uni pour procéder à l'extraction dudit au moins un moule (18) uni hors des porte-moules (20) en position ouverte de l'unité (12) de moulage et/ou à l'introduction dudit au moins un moule (18) uni entre lesdits porte-moules (20) en position ouverte de l'unité (12) de moulage.

3. Système d'assistance selon la revendication 1 ou 2, **caractérisé en ce que** ledit au moins un organe principal de préhension est constitué par une pince (78) principale apte à saisir ladite première partie (80) du moule (18) uni.

4. Système d'assistance selon l'une des revendications 1 à 3, **caractérisé en ce que** les moyens (76) de manipulation comportent au moins un organe (88) secondaire de préhension destiné à coopérer avec une seconde partie (90) du moule (18) uni qui est accessible lorsque l'unité (12) de moulage est en position ouverte.

5. Système d'assistance selon la revendication 4, **caractérisé en ce que** ledit au moins un organe secondaire de préhension est constitué par une pince (88) secondaire apte à saisir ladite seconde partie (90) du moule (18) uni.

6. Système d'assistance selon l'une des revendications 4 ou 5, **caractérisé en ce que** au moins l'organe (88) secondaire de préhension est monté mobile entre au moins une position escamotée et une position avancée.

7. Système d'assistance selon l'une quelconque des revendications 1 à 6, **caractérisé en ce que** le système (10) d'assistance comporte des moyens aptes à maintenir lesdits au moins deux éléments (22) de moulage dudit moule (18) qui sont réunis ensemble dans ladite position jointe pour former ledit sous-ensemble unitaire transportable, dit moule uni.

8. Système d'assistance selon la revendication 7, **caractérisé en ce que** lesdits moyens destinés à réunir ensemble lesdits au moins deux éléments (22) de moulage pour former le moule (18) uni sont constitués par les moyens (76) de manipulation.

9. Système d'assistance selon l'une quelconque des revendications précédentes dépendant de la revendication 2, **caractérisé en ce que** la tête (74) du dispositif (16) de transport comporte des moyens (76) de manipulation doublés qui sont respectivement formés par des premiers moyens (76A) de manipulation et par des deuxièmes moyens (76B) de manipulation.

10. Système d'assistance selon la revendication 9, **caractérisé en ce que** la tête (74) est montée mobile en rotation autour d'un axe (A) de rotation de manière à positionner sélectivement l'un ou l'autre desdits premier ou deuxième moyens (76A, 76B) de manipulation d'un moule (18) uni lors des opérations de changement du moule d'une unité (12) de moulage.

11. Système d'assistance selon l'une quelconque des revendications précédentes, **caractérisé en ce que** le système (10) d'assistance comporte un module (100) d'assistance qui, associé audit dispositif (16) de transport, comporte des moyens d'actionnement aptes au moins à provoquer sélectivement l'ouverture ou la fermeture de l'unité (12) de moulage.

12. Système d'assistance selon la revendication 11, **caractérisé en ce que** le module (100) d'assistance du système (10) comporte des moyens d'actionnement aptes à commander sélectivement un dispositif (70) de verrouillage de l'unité (12) de moulage entre des positions verrouillée et déverrouillée.

13. Système d'assistance selon la revendication 11 ou 12, **caractérisé en ce que** le système (10) d'assistance comporte une unité de contrôle apte à piloter en synchronisation les moyens (76) de manipulation du bras (96) robotisé du dispositif (16) de transport d'un moule (18) uni et les moyens d'actionnement du module (100) d'assistance pour réaliser de manière automatisé les opérations de changement de moule de l'unité (12) de moulage.

## Patentansprüche

1. System (10) zur Unterstützung beim Formenwechsel und Blasstation (12), wobei das System (10) zur Unterstützung beim Formenwechsel dazu dient, beim Wechseln mindestens einer Blasform (18) der Blasstation (12) eingesetzt zu werden, mit der eine Maschine (14) zur Produktion von Behältern durch Umformen eines zuvor temperierten Kunststoffvorformlings mittels mindestens eines Fluids unter Druck bestückt ist,
wobei die Blasstation (12) mindestens umfasst:
- zwei Formenträger (20), die beweglich zwischen mindestens einer geöffneten Position und einer geschlossenen Position der Blasstation (12) angebracht sind, und
- eine Blasform (18), die mindestens zwei Formelemente (22) umfasst, die verbunden werden können, um eine zusammengefügte Position einzunehmen, oder separiert werden können, um eine getrennte Position einzunehmen,
wobei das Unterstützungssystem (10) mindestens eine Vorrichtung (16) zum Transportieren einer Blasform (18), die eine transportable einstückige Baugruppe, zusammengesetzte Blasform genannt, bildet, umfasst,
wobei die Transportvorrichtung (16) mindestens einen Roboterarm (96) umfasst, um im Raum in Bezug auf die Blasstation (12) Handhabungsmittel (76) zum Handhaben mindestens einer zusammengesetzten Blasform (18) zu positionieren, um einen Wechsel der mindestens einen Blasform (18) der Blasstation (12) vorzunehmen,
**dadurch gekennzeichnet, dass** jedes der mindestens zwei Formelemente (22) der Blasform (18) geeignet ist, über zugehörige Fixierungsmittel (60) ausbaubar an einem der zugehörigen Formenträger (20) fixiert zu werden, wobei die zugehörigen Fixierungsmittel (60) geeignet sind, bei geschlossener Blasstation (12) zwischen mindestens einer Fixierungsposition und einer Löseposition gesteuert zu werden,
dadurch, dass die Handhabungsmittel (76) mindestens ein Hauptgreiforgan (78) umfassen, das dazu dient, mit einem ersten Teil (80) der zusammengesetzten Blasform (18) zusammenzuwirken, der für das Hauptgreiforgan (78) bei geschlossener Blasstation (12) erreichbar ist,
und dadurch, dass der Roboterarm (96) zur Positionierung der Handhabungsmittel (76) im Raum in Bezug auf die Blasstation (12) entlang einem Koordinatensystem (X, Y, Z) ausgelegt ist.

2. Unterstützungssystem nach Anspruch 1, **dadurch gekennzeichnet, dass** die Transportvorrichtung (16) mindestens einen Kopf (74) umfasst, der, zum Roboterarm (96) gehörend, die Handhabungsmittel (76) umfasst, die mit mindestens einer zusammengesetzten Blasform (18) zusammenwirken, um das Entnehmen der mindestens einen zusammengesetzten Blasform (18) aus den geöffneten Formenträgern (20) der Blasstation (12) und/oder das Einsetzen der mindestens einen zusammengesetzten Blasform (18) zwischen die geöffneten Formenträger (20) der Blasstation (12) vorzunehmen.

3. Unterstützungssystem nach Anspruch 1 oder 2, **dadurch gekennzeichnet, dass** das mindestens eine Hauptgreiforgan aus einer Hauptzange (78) besteht, die geeignet ist, den ersten Teil (80) der zusammengesetzten Blasform (18) zu greifen.

4. Unterstützungssystem nach einem der Ansprüche 1 bis 3, **dadurch gekennzeichnet, dass** die Handhabungsmittel (76) mindestens ein zweites Greiforgan (88) umfassen, das dazu dient, mit einem zweiten Teil (90) der zusammengesetzten Blasform (18) zusammenzuwirken, der bei geöffneter Blasstation (12) erreichbar ist.

5. Unterstützungssystem nach Anspruch 4, **dadurch gekennzeichnet, dass** das mindestens eine zweite Greiforgan aus einer zweiten Zange (88) besteht, die geeignet ist, den zweiten Teil (90) der zusammengesetzten Blasform (18) zu greifen.

6. Unterstützungssystem nach einem der Ansprüche 4 oder 5, **dadurch gekennzeichnet, dass** mindestens das zweite Greiforgan (88) beweglich zwischen mindestens einer eingezogenen Position und einer ausgefahrenen Position angebracht ist.

7. Unterstützungssystem nach einem der Ansprüche 1 bis 6, **dadurch gekennzeichnet, dass** das Unterstützungssystem (10) Mittel umfasst, die geeignet sind, die mindestens zwei Formelemente (22) der Blasform (18) zu halten, die in der zusammengefügten Position verbunden werden, um die transportable einstückige Untereinheit, zusammengesetzte Blasform genannt, zu bilden.

8. Unterstützungssystem nach Anspruch 7, **dadurch gekennzeichnet, dass** die Mittel, die dazu dienen, die mindestens zwei Formelemente (22) zu verbinden, um die zusammengesetzte Blasform (18) zu bilden, aus den Handhabungsmitteln (76) bestehen.

9. Unterstützungssystem nach einem der vorhergehenden Ansprüche, die von Anspruch 2 abhängen, **dadurch gekennzeichnet, dass** der Kopf (74) der Transportvorrichtung (16) doppelte Handhabungsmittel (76) umfasst, die aus ersten Handhabungsmitteln (76A) bzw. aus zweiten Handhabungsmitteln (76B) gebildet werden.

10. Unterstützungssystem nach Anspruch 9, **dadurch gekennzeichnet, dass** der Kopf (74) drehbeweglich um eine Drehachse (A) angebracht ist, so dass er selektiv das eine oder das andere der ersten oder der zweiten Handhabungsmittel (76A, 76B) einer zusammengesetzten Blasform (18) bei den Arbeitsschritten zum Wechseln der Blasform einer Blasstation (12) positioniert.

11. Unterstützungssystem nach einem der vorhergehenden Ansprüche, **dadurch gekennzeichnet, dass** das Unterstützungssystem (10) ein Unterstützungsmodul (100) umfasst, das, zur Transportvorrichtung (16) gehörend, Betätigungsmittel umfasst, die in der Lage sind, selektiv mindestens das Öffnen oder Schließen der Blasstation (12) zu bewirken.

12. Unterstützungssystem nach Anspruch 11, **dadurch gekennzeichnet, dass** das Unterstützungsmodul (100) des Systems (10) Betätigungsmittel umfasst, die geeignet sind, selektiv eine Verriegelungsvorrichtung (70) der Blasstation (12) zwischen verriegelten und entriegelten Positionen zu steuern.

13. Unterstützungssystem nach Anspruch 11 oder 12, **dadurch gekennzeichnet, dass** das Unterstützungssystem (10) ein Steuergerät umfasst, das geeignet ist, die Handhabungsmittel (76) des Roboterarms (96) der Transportvorrichtung (16) einer zusammengesetzten Blasform (18) und die Betätigungsmittel des Unterstützungsmoduls (100) synchronisiert anzusteuern, um die Arbeitsschritte zum Formenwechsel der Blasstation (12) automatisiert auszuführen.

## Claims

1. System (10) for aiding in the replacement of a mould and moulding unit (12), the system (10 for aiding in the replacement of a mould being intended to be used for the replacement of at least one mould (18) of the moulding unit (12) equipping a machine (14) for manufacturing containers by the forming, by means of at least one fluid under pressure, of a preform made from a plastic material having been thermally conditioned beforehand,
said moulding unit (12) comprising at least:
- two mould carriers (20) which are mounted so as to be movable between at least one open position and one closed position of the moulding unit (12), and
- a mould (18) comprising at least two moulding elements (22) capable of being brought together in order to occupy a joined position, or of being separated in order to occupy a disjoined position,
in which said system (10) for aiding comprises at least one device (16) for transporting a mould (18) forming a transportable unit subassembly, known as a joined mould, said transport device (16) comprising at least one robotic arm (96) for positioning, in space, with respect to the moulding unit (12), means (76) for handling at least one joined mould (18) so as to carry out a replacement of said at least one mould (18) of said moulding unit (12),
**characterized in that** each of said at least two moulding elements (22) of the mould (18) is adapted to be secured in a detachable manner to one of the associated mould carriers (20) by associated securing means (60), said associated securing means (60) are adapted to be controlled when the moulding unit (12) is in the closed position between at least one securing position and one release position,
**in that** said handling means (76) comprise at least one principal holding device (78) intended to interact with a first part (80) of the joined mould (18) which is accessible to said principal holding device (78) when the moulding unit (12) is in the closed position,
and **in that** said robotic arm (96) is designed for positioning, in space, said handling means (76) with respect to the moulding unit (12) along a trihedron (X, Y, Z).

2. System for aiding according to Claim 1, **characterized in that** said transport device (16) comprises at least one head (74), which, in association with said robotic arm (96), comprises said handling means (76) interacting with at least one joined mould (18) in order to undertake the removal of said at least one joined mould (18) from the mould carriers (20) in the open position of the moulding unit (12), and/or the insertion of said at least one joined mould (18) between said mould carriers (20) in the open position of the moulding unit (12) .

3. System for aiding according to Claim 1 or 2, **characterized in that** said at least one principal holding device is constituted by a principal gripper (78) adapted to take hold of said first part (80) of the joined mould (18) .

4. System for aiding according to one of Claims 1 to 3, **characterized in that** the handling means (76) comprise at least one secondary holding device (88) intended to interact with a second part (90) of the joined mould (18) which is accessible when the moulding unit (12) is in the open position.

5. System for aiding according to Claim 4, **characterized in that** said at least one secondary holding device consists of a secondary gripper (88) adapted to take hold of said second part (90) of the joined mould (18) .

6. System for aiding according to either of Claims 4 and 5, **characterized in that** at least the secondary holding device (88) is mounted so as to be movable between at least one retracted position and one advanced position.

7. System for aiding according to any one of Claims 1 to 6, **characterized in that** the system (10) for aiding comprises means adapted to maintain said at least two moulding elements (22) of said mould (18) which are brought together in said joined position in order to form said transportable unit subassembly, known as the joined mould.

8. System for aiding according to Claim 7, **characterized in that** said means intended to bring together said at least two moulding elements (22) in order to form the joined mould (18) consist of the handling means (76).

9. System for aiding according to any one of the preceding claims dependent on Claim 2, **characterized in that** the head (74) of the transport device (16) comprises double handling means (76) which are formed respectively by first handling means (76A) and by second handling means (76B).

10. System for aiding according to Claim 9, **characterized in that** the head (74) is mounted rotatably about an axis (A) of rotation in such a way as to position selectively one or other of said first or second means (76A, 76B) for handling a joined mould (18) at the time of operations for the replacement of a mould in a moulding unit (12).

11. System for aiding according to any one of the preceding claims, **characterized in that** the system (10) for aiding comprises a module (100) for aiding, which, in association with said transport device (16), comprises means of actuation adapted at least to bring about selectively the opening or the closing of the moulding unit (12).

12. System for aiding according to Claim 11, **characterized in that** the module (100) for aiding of the system (10) comprises means of actuation adapted to control selectively a device (70) for locking the moulding unit (12) between a locked and an unlocked position.

13. System for aiding according to Claims 11 or 12, **characterized in that** the system (10) for aiding comprises a control unit adapted for the synchronized guidance of the handling means (76) of the robotic arm (96) of the device (16) for transporting of a joined mould (18) and the means for actuating the module (100) for aiding in order to realize the operations for the replacement of a mould in the moulding unit (12) in an automated manner.
